## Europäisches Patentamt

## European Patent Office

## Office européen des brevets

(11) Numéro de publication: **0 212 762**
**B1**

---

## FASCICULE DE BREVET EUROPEEN

(45) Date de publication du fascicule du brevet:
**24.05.89**

(51) Int. Cl.⁴: **B05C 3/02**, B05C 3/09,
B05C 13/00, H01B 19/04

(21) Numéro de dépôt: **86201507.0**

(22) Date de dépôt: **27.02.84**

(60) Numéro de publication de la demande initiale en application de l'article 76 CBE: **0119126**

---

(54) Dispositif pour la réalisation de couches monomoléculaires alternées.

---

(30) Priorité: **04.03.83 FR 8303578**

(43) Date de publication de la demande:
**04.03.87 Bulletin 87/10**

(45) Mention de la délivrance du brevet:
**24.05.89 Bulletin 89/21**

(84) Etats contractants désignés:
**DE GB NL**

(56) Documents cités:
**BE-A- 430 388**
**FR-A- 2 341 199**
**US-A- 2 838 023**

(73) Titulaire: **COMMISSARIAT A L'ENERGIE ATOMIQUE,
31/33, rue de la Fédération, F-75015 Paris(FR)**

(72) Inventeur: **Barraud, André, 4 rue des Clozeaux,
F-91440 Bures sur Yvette(FR)**
Inventeur: **Leloup, Jean, 4, rue du Clos, F-91190 Gif sur
Yvette(FR)**

(74) Mandataire: **Mongrédien, André et al, c/o SOCIETE DE
PROTECTION DES INVENTIONS 25, rue de Ponthieu,
F-75008 Paris(FR)**

---

## Description

La présente invention se rapporte à la fabrication et au dépôt sur un substrat de couches monomoléculaires et a plus spécialement pour objet un dispositif permettant la réalisation de couches monomoléculaires alternées, c'est-à-dire des séquences de couches de deux matériaux différents.

Les couches monomoléculaires, notamment de composés organiques, trouvent de nombreuses applications, particulièrement dans le domaine de l'électronique où elles permettent de réaliser des structures métal-isolant-métal dans lesquelles la couche d'isolant a une épaisseur parfaitement contrôlée et définie.

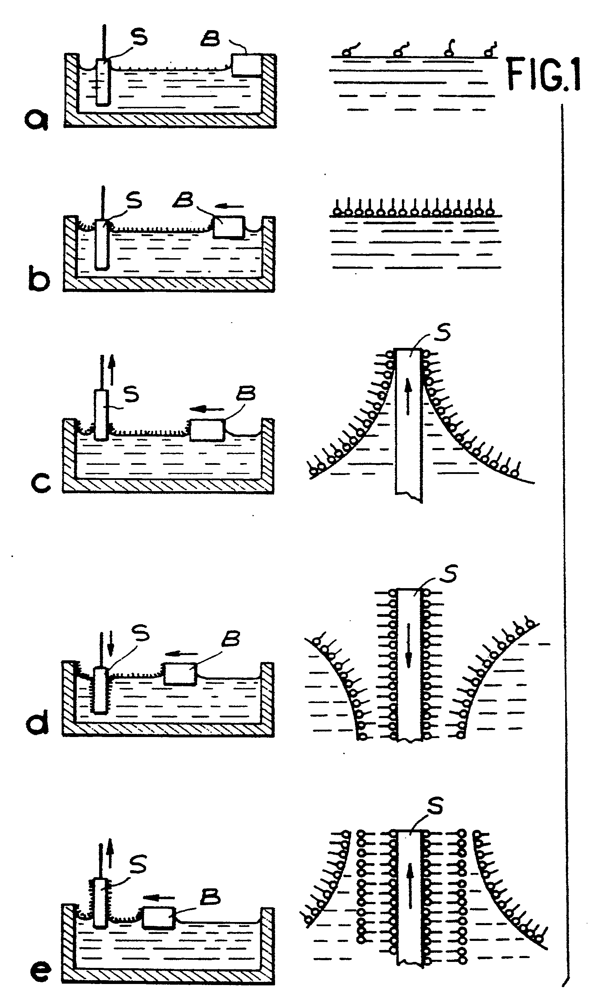

La méthode la plus connue pour réaliser des couches monomoléculaires est la méthode dite "de Langmuir-Blodgett" qui consiste à répandre à la surface d'un liquide, généralement de l'eau, une solution de la molécule à déposer. Les figures 1a à 1e illustrent cette méthode. La solution s'étale à la surface (figure 1a), puis on laisse évaporer le solvant pour former la couche monomoléculaire que l'on comprime ensuite à une pression superficielle déterminée par déplacement d'une barrière flottante B (figure 1b). On réalise le dépôt en plongeant et remontant le substrat S dans l'eau de la cuve à travers cette couche monomoléculaire (figures 1c, 1d et 1e). Généralement, les molécules de la couche à déposer sont des molécules amphiphiles, c'est-à-dire qu'elles possèdent à la fois une partie hydrophile et une partie hydrophobe : après évaporation du solvant, les molécules s'orientent de telle sorte que la partie hydrophile se trouve contre la surface de l'eau tandis que la partie hydrophobe a tendance à s'éloigner de ladite surface (figure 1b). Le plus souvent, la partie hydrophobe est constituée par une chaîne aliphatique inerte et la partie hydrophile contient la partie active de la molécule.

La pratique habituelle pour comprimer la couche monomoléculaire consiste à déplacer une barrière flottante à la surface du liquide au fur et à mesure que le dépôt est effectué sur le substrat afin de maintenir la pression superficielle à la valeur désirée. En fin d'opération, on ramène la barrière mobile à sa position de départ afin de pouvoir recommencer l'opération en introduisant une nouvelle quantité de solvant à la surface de l'eau. Si cette méthode permet de réaliser facilement des couches monomoléculaires, on voit qu'elle ne peut pas être utilisée pour assurer la fabrication et le dépôt en continu des couches monomoléculaires sur des solides de grande longueur tels que des bandes plastiques ou métalliques : en effet, il est nécessaire d'interrompre l'opération périodiquement afin de réapprovionner le bain avec la solution du matériau à déposer.

Le brevet français n° 2 341 199, appartenant au demandeur, décrit un perfectionnement à cette méthode grâce à des rouleaux tournants partiellement immergés dans l'eau d'une cuve compartimentée qui permettent de transférer la couche monomoléculaire d'un compartiment à l'autre sous pression : on peut ainsi réaliser le dépôt en continu sur des bandes plastique ou métalliques. Le film qui peut être obtenu par l'une ou l'autre de ces deux méthodes peut être transféré sur un substrat solide en faisant simplement traverser audit substrat la surface de l'eau. Par des immersions et émersions successives, d'autres couches monomoléculaires identiques à la première peuvent être déposées, la partie hydrophile d'une couche étant en contact avec la partie hydrophile de la couche suivante, de même pour les parties hydrophobes. Le dépôt ainsi obtenu porte le nom de film de Langmuir-Blodgett ou film L. B.

Cependant, cette méthode présente encore un inconvénient : si elle permet de réaliser le dépôt en continu, elle ne permet de fabriquer que des couches de Langmuir-Blodgett identiques entre elles. On peut encore envisager l'utilisation successive de deux cuves indépendantes avec transfert de l'échantillon par voie aérienne mais on ne peut réaliser que des séquences "deux par deux" et non "alternées" puisque les parties hydrophiles en contact appartiennent nécessairement à deux molécules identiques.

La présente invention a justement pour but de remédier à ces inconvénients grâce à un dispositif qui permet de réaliser des couches monomoléculaires alternées, c'est-à-dire que la partie hydrophile d'une couche monomoléculaire d'un premier matériau est en contact avec la partie hydrophile d'une couche monomoléculaire d'un deuxième matériau différent du premier. L'un des matériau (A) peut être une molécule et l'autre (B) une molécule différente. Les matériaux peuvent aussi être des mélanges, l'un d'eux pouvant contenir certains constituants de l'autre ou, éventuellement, tous.

Le dispositif objet de l'invention comprend, comme décrit das le brevet français 2 341 199:
- une cuve séparée en deux compartiments par une cloison dont au moins une partie a une forme telle qu'elle permette le passage du substrat d'un compartiment à l'autre à l'intérieur du liquide, et
- des moyens pour transférer le substrat d'un compartiment à l'autre.

Selon l'invention, les moyens de transfert du substrat comprennent un support mobile en rotation et des moyens de fixation dudit substrat sur le support, ce dernier étant placé dans une ouverture de la cloison au niveau de la surface du liquide et ayant une forme telle qu'il empêche tout contact entre les couches monomoléculaires situées dans chacun desdits compartiments.

Dans ce dernier cas, les moyens de fixation du substrat sur le support peuvent comprendre au moins une tige montée sur le support, cette tige ayant une première extrémité fixée audit support et une deuxième extrémité pourvue de moyens d'accrochage dudit substrat.

L'invention apparaîtra mieux à la lecture de la description qui va suivre, donnée à titre purement illustratif et nullement limitatif, en référence aux dessins annexés, dans lesquels:
- les figures 1a à 1e, déjà décrites, illustrent le principe de la méthode classique de Langmuir-Blodgett,
- la figure 2 est une vue en perspective illustrant le principe général de fonctionnement du dispositif objet de l'invention,
- la figure 3 est une vue en perspective à plus grande échelle illustrant les moyens de transfert du substrat, et
- la figure 4 est une vue schématique illustrant diverses séquences de couches monomoléculaires qu'il est possible d'obtenir avec le dispositif objet de l'invention.

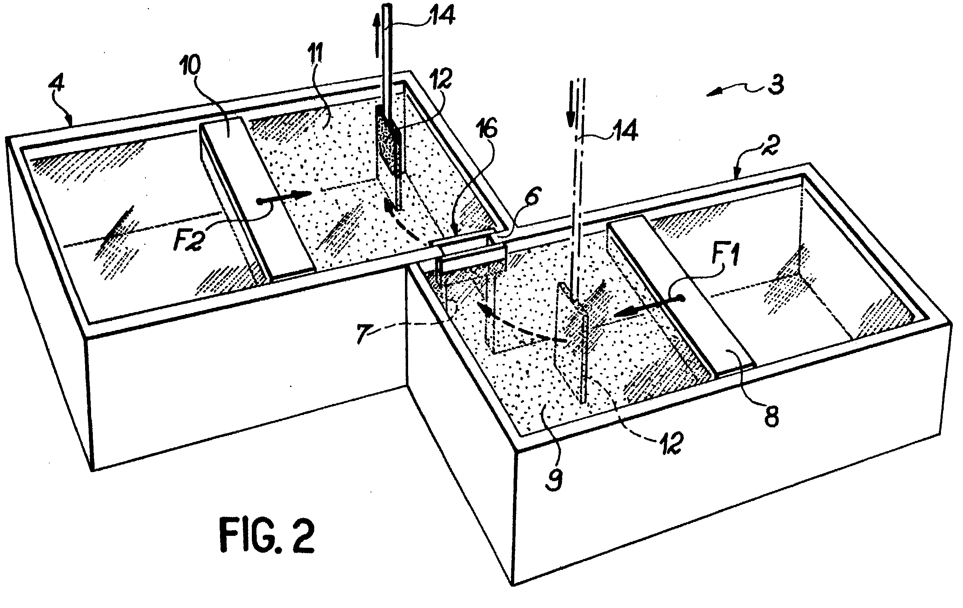

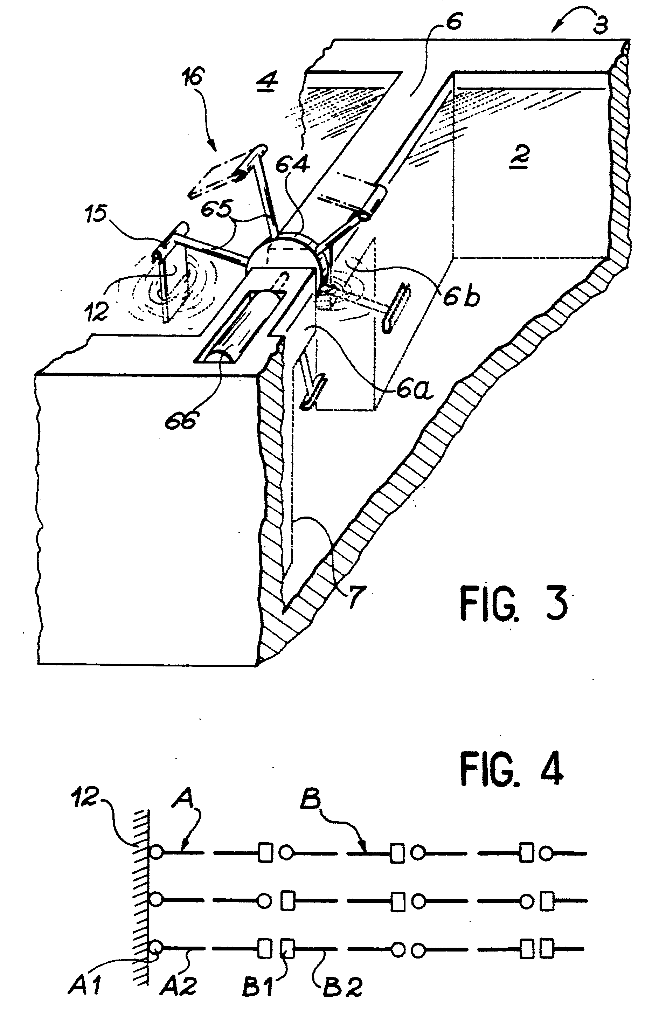

Sur la figure 2, on voit que le dispositif comporte essentiellement deux cuves 2 et 4 qui sont accolées par une partie de paroi commune 6 et peuvent donc être considérées comme deux compartiments d'une cuve unique 3. La paroi 6 comporte une ouverture 7 qui permet la communication entre les deux compartiments, la partie supérieure de l'ouverture 7 étant équipée d'un dispositif 16 qui sera décrit ultérieurement en référence à la figure 3 et qui empêche tout contact entre les couches monomoléculaires situées dans chacun des compartiments 2 et 4 respectivement. Une barrière flottante 8 mobile dans le sens de la flèche F1 à la surface du liquide contenu dans la cuve 2 permet la compression de la couche monomoléculaire 9 contenue dans cette cuve 2 tandis qu'une barrière flottante 10 mobile dans le sens de la flèche F2 à la surface du liquide contenu dans le compartiment 4 permet la compression de la couche monomoléculaire 11 contenue dans ce compartiment.

Selon l'invention, un substrat ou échantillon 12 est introduit dans la partie de la cuve 2 contenant la couche monomoléculaire 9 à l'aide de moyens de levage 14 représentés schématiquement en traits mixtes sur la figure et qui permettent de déplacer l'échantillon 12 aussi bien suivant une direction verticale que suivant une direction horizontale. Une fois que l'échantillon 12 a traversé de haut en bas la couche monomoléculaire 9, il est transféré sous l'eau dans le compartiment 4 à travers l'ouverture 7, le dispositif 16 étant bien entendu agencé de manière à permettre le passage des moyens de levage 14 sans qu'il y ait contact entre les couches monomoléculaires 9 et 11. Une fois que l'échantillon 12 se trouve dans la cuve 4, il est remonté par les moyens de levage 14, ce qui permet le dépôt de la couche monomoléculaire 9 sur la couche 11.

On voit donc qu'au cours du premier passage dans la cuve 2, c'est la partie hydrophobe de la couche qui s'est déposée en contact avec la surface du substrat tandis qu'au cours du passage dans la cuve 4, c'est la partie hydrophile de la couche monomoléculaire contenue dans cette cuve qui s'est déposée sur le substrat, donc en contact avec la partie hydrophile de la première couche.

La figure 3 représente de manière plus détaillée les moyens de transfert du substrat d'un compartiment à l'autre. On retrouve sur cette figure la cuve 3 séparée en deux compartiments par la cloison 6. Cette dernière descend jusqu'au fond de la cuve et présente une ouverture 7. A la partie supérieure de celle-ci, c'est-à-dire au voisinage de la surface du liquide, la cloison 6 comporte deux parties en porte-à-faux 6a et 6b séparées par un intervalle dans lequel se trouve un tambour 64 dont l'épaisseur est à peu près égale à la largeur de l'espace compris entre les parties 6a et 6b de la cloison 6. Le tambour 64 est mobile en rotation à l'aide d'un moteur 66 et comporte plusieurs tiges rigides 65 s'étendant radialement vers l'extérieur : à l'extrémité de chacune de ces tiges, une pince 15 maintient l'échantillon 12. Lorsque celui-ci est une plaque rectangulaire, la disposition de l'ensemble est telle que le plan du substrat 12 est à peu près perpendiculaire à la direction définie par la tige 65 correspondante. Dans le cas de la figure 3, le mouvement de rotation du tambour 64 permet à chaque échantillon de passer d'une cuve à l'autre alternativement sous l'eau et au-dessus de celle-ci, ce qui permet de nombreuses combinaisons pour le dépôt : en effet, le système peut tourner dans les deux sens et on peut l'arrêter ou inverser le sens de marche, au gré du cycle désiré.

Dans le cas de la figure 3, on obtient des résultats équivalents en remplaçant le système de pinces par des fils souples au bout desquels sont suspendus les échantillons à revêtir.

La figure 4 montre diverses séquences qu'il est possible d'obtenir avec le dispositif objet de l'invention et qui étaient impossibles à obtenir avec les dispositifs de l'art antérieur. La figure 4 correspond au cas où l'on dépose des couches monomoléculaires de deux matériaux différents A et B. On voit sur la figure que les molécules du premier matériau A se composent d'une partie hydrophile A1 représentée schématiquement sous forme d'un cercle et d'une partie hydrophobe A2 représentée sous forme d'un trait plein. De même, les molécules du deuxième matériau B se composent d'une partie hydrophile B1 représentée schématiquement par un carré et d'une partie hydrophobe B2 représentée schématiquement par un trait plein. On voit sur la figure, dans le cas de la ligne supérieure, qu'à partir de la surface externe du substrat 12, on a déposé d'abord une molécule A dont la partie hydrophile se trouve sur la surface du substrat 12, puis une molécule B orientée en sens inverse, puis à nouveau une molécule A orientée dans le même sens que la première molécule A, à nouveau une molécule B et ainsi de suite. La partie hydrophile d'une molécule A est toujours en contact avec la partie hydrophile d'une molécule B et il en est de même pour les parties hydrophobes : il n'est en effet pas possible de réaliser des couches monomoléculaires où une partie hydrophile d'une molécule est en contact avec la partie hydrophobe de la molécule constituant la couche voisine. Cette séquence a été réalisée par passage de l'échantillon alternativement au-dessus et au-dessous de la surface du liquide contenu dans la cuve.

Sur la ligne intermédiaire, la séquence qui a été réalisée comporte deux molécules A orientées en sens contraire, puis deux molécules B aussi orientées en sens contraire, puis deux molécules A toujours orientées en sens contraire et ainsi de suite, la partie hydrophile d'une molécule A étant en contact avec la partie hydrophile d'une molécule B tandis que deux parties hydrophobes en contact appartiennent à deux molécules identiques : ce résultat s'obtient par des transferts d'un compartiment à l'autre sous l'eau uniquement.

Enfin, dans l'exemple de la ligne inférieure, on a une séquence dans laquelle les parties hydrophiles en contact appartiennent à deux molécules identiques tandis que les parties hydrophobes en contact appartiennent à deux molécules différentes : ceci est obtenu par transfert aérien seul.

Afin de vérifier le caractère alterné des couches déposées suivant les cycles qui viennent d'être décrits, on a réalisé des essais de spectrométrie infrarouge sur des séquences acide béhénique-porphyrine : si le dépôt est conforme à la ligne supérieure de la figure 4, on observe une bande d'absorption à 1 725 cm⁻¹ qui disparaît et est remplacée par une bande d'absorption entre 1 700 et 1 705 cm⁻¹ si le dépôt est conforme à la ligne inférieure de la figure 4.

Ainsi, le dispositif objet de l'invention présente des avantages particulièrement intéressants puisqu'on peut réaliser des couches monomoléculaires alternées avec différentes combinaisons d'orientation moléculaire de manière simple et rapide, les temps de transfert d'une cuve à l'autre étant très réduits. On peut donc non seulement réaliser des séquences de molécules successives en couches monomoléculaires superposées, mais aussi orienter vectoriellement les molécules dans chaque couche. De plus, ce dispositif est simple et facile à réaliser, ce qui conduit à un faible coût de l'installation.

Enfin, il est bien entendu que l'invention ne se limite pas aux seuls exemples de réalisation qui viennent d'être décrits, mais qu'on peut envisager des variantes sans sortir pour autant du cadre de l'invention tel que défini par les revendications. En particulier, dans tous les cas, la compression des couches monomoléculaires peut se faire indifféremment soit par la méthode classique de Langmuir-Blodgett, soit par la méthode avec rouleaux tournants illustrée dans le brevet français n° 2 341 199 mentionné au début de la présente description.

## Revendications

1. Dispositif pour la réalisation de couches monomoléculaires alternées sur au moins un substrat (12), comprenant :
- une cuve (3) séparée en deux compartiments (2, 4) par une cloison (6) dont au moins une partie a une forme telle qu'elle permette le passage du substrat (12) d'un compartiment à l'autre à l'intérieur du liquide, et
- des moyens pour transférer le substrat (12) d'un compartiment à l'autre,
caractérisé en ce que les moyens de transfert du substrat (12) comprennent un support (64) mobile en rotation et des moyens de fixation dudit substrat (12) sur le support (64), ce dernier étant placé dans une ouverture (7) de la cloison (6) au niveau de la surface du liquide, ledit suport ayant une forme telle qu'il empêche tout contact entre les couches monomoléculaires situées dans chacun desdits compartiments (2, 4).

2. Dispositif selon la revendication 1, caractérisé en ce que lesdits moyens de fixation du substrat (12) sur le support (64) comprennent au moins une tige (65) montée sur le support (64), cette tige (65) ayant une première extrémité fixée audit support (64) et une deuxième extrémité pourvue de moyens d'accrochage dudit substrat (12).

## Claims

1. Device for producing alternate monomolecular layers on at least one substrate (12), comprising:
- a vessel (3) divided into two compartments (2, 4) by a partition (6) at least a part of which is of such shape that it allows the substrate (12) to pass from one compartnent to the other inside the liquid and
- means for transferring the substrate (12) from one compartment to the other,
characterized in that the means for transferring the substrate (12) comprise a rotationally movable support (64) and means for fastening the said substrate (12) onto the support (64), the latter being placed in an opening (7) of the partition (6) at the height of the liquid surface, the said support being of such shape that it prevents any contact between the monomolecular layers situated in each of the said compartments (2, 4).

2. Device according to Claim 1, characterized in that the said means for fastening the substrate (12) onto the support (64) comprise at least one rod (65) mounted on the support (64), this rod (65) having a first end fastened to the said support (64) and a second end provided with means for attaching the said substrate (12).

## Patentansprüche

1. Vorrichtung zum Ausbilden von einander abwechselnden monomolekularen Schichten auf wenigstens einem Substrat (12), mit
- einem Trog (3), welcher durch eine Trennwand (6) in zwei Abteilungen (2, 4) unterteilt ist, wobei wenigstens ein Teil der Trennwand eine Form aufweist, welche die Überführung des Substrats (12) innerhalb der Flüssigkeit von einer Abteilung in die andere gestattet, und
- Einrichtungen zum Überführen des Substrats (12) von einer Abteilung in die andere,
dadurch gekennzeichnet, daß die Einrichtungen zum Überführen des Substrats (12) eine drehbar gelagerte Trageinrichtung (64) mit einer Einrichtung zum Befestigen des Substrats (12) an der Trageinrichtung (64) aufweisen, wobei letztere in Höhe des Spiegels der Flüssigkeit in einer Öffnung (7) der Trennwand (6) angeordnet ist und die Trageinrichtung eine derartige Form aufweist, daß sie jeden Kontakt zwischen den in jeder der genannten Abteilungen (2, 4) angeordneten monomolekularen Schichten ausschließt.

2. Vorrichtung nach Anspruch 1, dadurch gekennzeichnet, daß die Einrichtung zum Befestigen des Substrats (12) an der Trageinrichtung (64) wenigstens eine an der Trageinrichtung (64) angebrachte Stange (65) aufweist, wobei die Stange (65) mit einem ersten Ende an der Trageinrichtung (64) befestigt und an einem zweiten Ende mit einer Halterung für das Substrat (12) versehen ist.

FIG.1

FIG. 2

FIG. 3

FIG. 4